# EUROPEAN PATENT APPLICATION

(11) **EP 3 037 848 A1**
(43) Date of publication of application: **29.06.2016**
(21) Application number: 15202529.2
(22) Date of filing: 23.12.2015
(51) Int. Cl.: G01V 5/00

(54) **DUAL-SOURCE SECURITY INSPECTION CT SCANNING SYSTEM AND SCANNING METHOD**

(30) Priority: 23.12.2014 CN 201410811888
(71) Applicant: Tsinghua University, Haidian District, Beijing 100084 (CN); Nuctech Company Limited, Beijing 100084 (CN)
(72) Inventor: ZHANG, Li, 100084 BEIJING (CN); HONG, Mingzhi, 100084 BEIJING (CN); HUANG, Qingping, 100084 BEIJING (CN); JIN, Xin, 100084 BEIJING (CN)
(74) Representative: Delumeau, François Guy

(57) **Abstract**

The present disclosure provides a dual-source security inspection CT scanning system and scanning method. The system includes two sets of scan imaging systems (6, 7), wherein each set of the scan imaging systems (6, 7) has its own separate ray source (6-1, 7-1) and detector (6-2, 7-2), the two sets of scan imaging systems (6, 7) are juxtaposed on a same rotary mechanism (2), and a predetermined interval is provided between imaging planes of the two sets of scan imaging systems (6, 7). The present disclosure ensures the two sets of imaging optical paths do not interfere with each other, therefore effectively avoiding the problem of scattering mutual interference between the dual sources of the dual-source CT scanning system in the prior art.

## Description

### TECHNICAL FIELD

The present disclosure generally relates to the technical field of radiation detection, and more particularly, to a dual-source security inspection CT scanning system and scanning method.

### BACKGROUND

Generally, in a security inspection CT scanning system in the prior art, one set of ray source imaging system is installed for one rotary mechanism, and the ray source has only one type of energy. When an inspected object needs to be dual-energy scanned, a high and low energy detector is generally used to form a pseudo dual-energy image. As for a dual-source scanning system mainly used for medical heart scanning to solve the beating heart imaging problem, however, it is difficult to solve the problem of scattering mutual interference between dual sources, because the dual sources are located in the same scanning plane. With respect to the problem of scattering interference, an optimization algorithm may be used to solve the problem in the prior art. However, the optimization algorithm can only improve the scattering interference, but cannot solve the problem completely. As for a method to solve the scattering interference problem through a collimator, the collimator needs to mask the half of a light source to reduce the scattering interference at the expense of the half of the energy of the light source, therefore a flare angle utilization of the light source is reduced.

### SUMMARY

The present disclosure provides a dual-source security inspection CT scanning system and a scanning method in order to solve the scattering mutual interference problem between the dual sources in the prior art.

In order to solve the above technical problem, the present disclosure provides a dual-source security inspection CT scanning system, which includes:
two sets of scan imaging systems, wherein each set of the scan imaging systems has its own separate ray source and detector, the two sets of scan imaging systems are juxtaposed on a same rotary mechanism, and a predetermined interval is provided between the imaging planes of the two sets of scan imaging systems.

Further, the two ray sources of the two sets of scan imaging systems are disposed on the rotary mechanism at a predetermined angle.

Further, the two ray sources of the two sets of scan imaging systems are disposed on the rotary mechanism at an angle of 180° or 90°.

Further, the system is configured to:
reconstructing and acquiring a CT image based on scanned data of the two sets of scan imaging systems.

Further, the energy of the ray sources in the scan imaging systems is capable of switching between high energy and low energy.

Further, the system is configured to:
acquiring high energy scanned data and low energy scanned data of a same section respectively by using high energy and low energy ray sources of the two sets of scan imaging systems, reconstructing and acquiring a double-energy CT image of the same section.

Further, a forward speed of a conveyor belt of the dual-source security inspection CT scanning system is equal to a scanning speed of each set of the scan imaging systems.

Further, the system is configured to:
reconstructing and acquiring two or more single-energy CT image of different sections by using the scanned data of the two sets of scanning systems, wherein the scanned data of the two sets of scanning systems is complementary, and a complete CT image is reconstructed and acquired based on the complementary scanned data.

Further, a forward speed of a conveyor belt of the dual-source security inspection CT scanning system is two times of a scanning speed of each set of the scan imaging systems.

Further, the present disclosure also provides a dual source security inspection CT scanning method, which uses the two sets of scan imaging systems of the dual-source security inspection CT scanning system mentioned in any one of the above items to scan an object simultaneously.

Further, the method includes:
reconstructing and acquiring a CT image based on scanned data of the two sets of scan imaging systems.

Further, reconstructing and acquiring a CT image based on scanned data of the two sets of scan imaging systems includes:
acquiring high energy scanned data and low energy scanned data of a same section respectively by using high energy and low energy ray sources of the two sets of scan imaging systems, reconstructing and acquiring a double-energy CT image of the same section.

Further, a forward speed of a conveyor belt of the dual-source security inspection CT scanning system is equal to a scanning speed of each set of the scan imaging systems during a scanning process.

Further, reconstructing and acquiring a CT image based on the scanned data of the two sets of scan imaging systems includes:
reconstructing and acquiring two or more single-energy CT image of different sections by using the scanned data of the two sets of scanning systems, wherein the scanned data of the two sets of scanning systems is complementary, and a complete CT image is reconstructed and acquired based on the complementary scanned data.

Further, a forward speed of a conveyor belt of the dual-source security inspection CT scanning system is two times of a scanning speed of each set of scan imaging systems during a scanning process.

As can be seen, in the dual CT security scanning system and the scanning method provided in the present disclosure, two sets of imaging systems can be set respectively to ensure the two sets of imaging optical paths do not interfere with each other, therefore effectively avoiding the problem of scattering mutual interference between the dual sources of the dual-source CT scanning system in the prior art. The imaging method of the present disclosure is flexible and can double the scanning speed on condition that the rotating speed remains unchanged, therefore effectively solving the technical problem that enhancing the through-rate of inspected objects is limited by the rotating speed of the bearing. In addition, two sets of imaging system in the present disclosure can also use different energy to image, so as to acquire a true dual-energy image, thus the substance identification capability has a qualitative leap.

### BRIEF DESCRIPTION OF THE DRAWINGS

To illustrate technical solutions in the embodiments of the present disclosure or in the prior art more clearly, a brief introduction on the accompanying drawings which are needed in the description of the embodiments or the prior art is given below. Apparently, the accompanying drawings in the description below merely illustrate some of the embodiments of the present disclosure, based on these drawings other drawings may be obtained by those of ordinary skill in the art without any creative effort.
Figure 1 is a structure schematic diagram of a dual-source security inspection CT scanning system according to an embodiment of the present disclosure;
Figure 2 is an A-A sectional view of Figure 1;
Figure 3 is a B-B sectional view of Figure 1; and
Figure 4 is a schematic diagram of a scanning area of two sets of scan imaging systems of a dual-source security inspection CT scanning system according to an embodiment of the present disclosure.

### DETAILED DESCRIPTION

In order to make the purposes, technical solutions and advantages of the embodiments of the present disclosure clearer, a clear and complete description of the technical solutions in the embodiments of the present disclosure will be given below in combination with accompanying drawings in the embodiments of the present disclosure. Apparently, the embodiments described below are merely a part, but not all of the embodiments of the present disclosure. All of other embodiments obtained by those of ordinary skill in the art based on the embodiments of the present disclosure without any creative effort fall into the protection scope of the present disclosure.

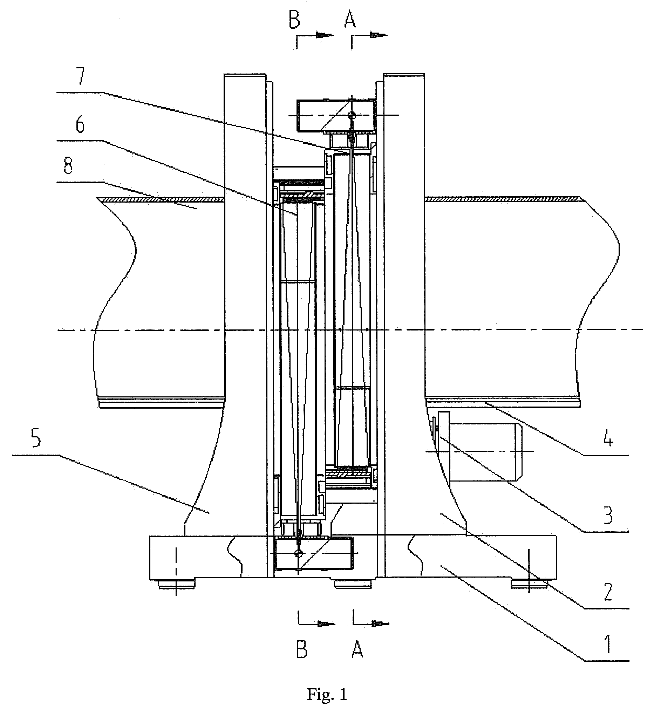

As can be seen in figures 1-3, the embodiment of the present disclosure firstly provides a dual-source security inspection CT scanning system, which includes:
two sets of scan imaging systems 6 and 7, each of the scan imaging systems having its own separate ray source (6-1, 7-1) and detector (6-2, 7-2), the two sets of scan imaging systems 6 and 7 being located in the same set of rotary mechanism beside each other, and a predetermined interval is provided between the imaging planes of the two sets of scan imaging systems.

In Figure 1, 1 denotes a base, 2 denotes a slip ring (i.e. rotary mechanism), 3 denotes a slip ring rotary motor, 4 denotes a conveyor belt, 5 denotes a slip ring auxiliary support, 6 denotes a first scan imaging system, 7 denotes a second scan imaging system, and 8 denotes a scanning channel.

The slip ring auxiliary support 5 may be selectively installed. The slip ring rotary motor 3 may drive the first scan imaging system 6 and the second scan imaging system 7 to rotate around the conveyor belt 4 simultaneously.

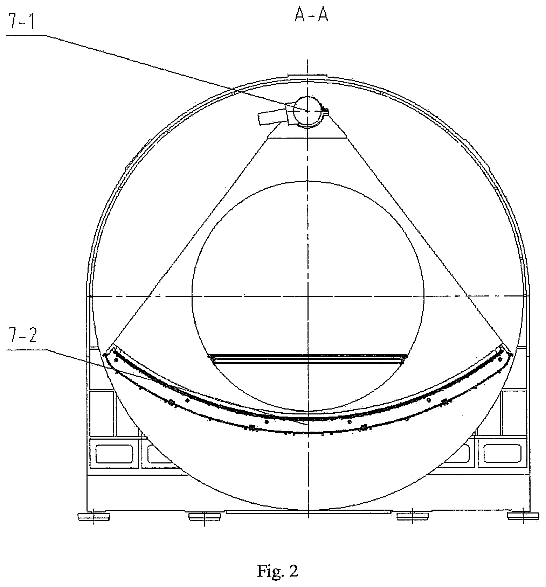

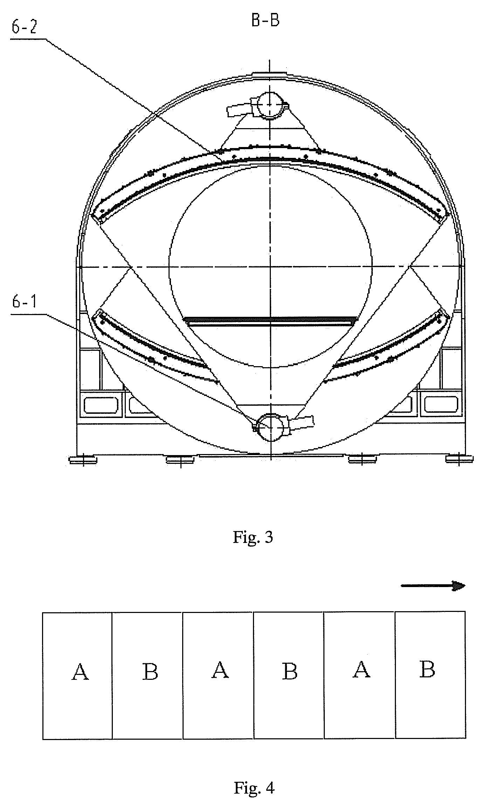

Figure 2 is an A-A sectional schematic view of Figure 1, figure 3 is a B-B sectional schematic view of Figure 1. The first scan imaging system 6 includes the ray source 6-1 and the detector 6-2 which are disposed opposite to each other on the slip ring 2, and the second scan imaging system 7 includes the ray source 7-1 and the detector 7-2 which are disposed opposite to each other on the slip ring 2. Optionally, the two ray sources (6-1, 7-1) of the two sets of scan imaging systems 6 and 7 may be disposed on the slip ring 2 at a predetermined angle. The two may be disposed at 180° or 90° from each other, so as to facilitate the counterweight and dynamic balance adjustment of the system. Wherein, the two ray sources (6-1, 7-1) disposed at 180° are the most favorable to the dynamic balance adjustment of the system.

A certain distance in the scanning direction needs to be kept between the first scan imaging system 6 and the second scan imaging system 7, and the minimum distance between them is the width of a detector. When the distance between them is relatively large, a larger scanning region can be covered, therefore effectively enhancing the scanning speed. Optionally, the two may be located at both sides of the same ring 2 respectively.

Optionally, according to the different requirements of practical applications, a CT image can be reconstructed and acquired based on the scanned data of the two sets of scan imaging systems, wherein the dual-source security inspection CT scanning system of an embodiment of the present disclosure may have two types of scanning manner:

When the requirement for the scanning speed is high in practice, the scan regions of the two sets of scan imaging systems 6 and 7 can be juxtaposed in the scanning direction without overlapping. That is, as seen in the schematic diagram shown in Figure 6, in the scanning direction along the direction of the arrow, the first scan imaging system 6 and the second scan imaging system 7 scan respectively an A region and a B region on the conveyor belt 4. At this time, the energy of the two ray sources (6-1, 7-1) are set the same, and the two sets of scan imaging systems 6 and 7 can reconstruct and acquire two or more single-energy images of different sections. Wherein, when the scanned data of the two sets of scanning systems is complementary to each other, the acquired two sets of scanned data can be combined together into a group of complete scanned data. At this time, a forward speed of a conveyor belt of the dual-source security inspection CT scanning system is two times of a scanning speed of each set of the scan imaging systems. So the scanning speed can be greatly enhanced by 100% on condition that the rotating speed of the slip ring 2 remains unchanged.

However, when the requirement for substance identification is high, the energy of the two ray sources (6-1, 7-1) of the two sets of scan imaging systems 6 and 7 can switch between high energy and low energy. At this time, the scan regions of the two sets of scan imaging systems 6 and 7 can overlap each other in the scanning direction, that is, each set of the scanning systems carries out scanning for the all scan regions of the conveyor belt 4. If the energy of the two ray sources (6-1, 7-1) is set to have high energy and low energy respectively, the acquired two sets of scanned data are the high energy scanned data and the low energy scanned data of the same section respectively. The true double-energy scanned data can be acquired after the high energy scanned data and the low energy scanned data has been superposed by an algorithm, which is different from the pseudo dual-energy scanning (i.e., the high energy and low energy data are collected respectively on condition that the energy of the ray sources remain unchanged) of the prior art. The dual-energy CT reconstruction using the true dual-energy data can make the substance identification more effective. In this case, a forward speed of a conveyor belt in the dual-source security inspection CT scanning system is equal to a scanning speed of each set of the scan imaging systems.

That is, the different imaging manner may be adjusted by adjusting the relationship between the forward speed of the conveyor belt and the scanning speed of the scan imaging system. For example: when the slip ring rotates one lap, the forward distance of the belt is equal to or approximately equal to the width of the detector along a channel direction (i.e., the scanning distance when the slip ring rotates one lap), a method of using two scanning planes to scan separately and to reconstruct separately may be applied to image with high and low energy respectively; and when the sliding ring rotates one lap and the forward distance of the conveyor belt is approximately equal to two or more times of the width of the detector along the channel direction, a method of splicing the scanned data of two scanning planes with single-energy and then reconstructing may be used to image.

An embodiment of the present disclosure also provides a dual-source security inspection CT scanning method, which uses the two sets of scan imaging systems of the dual-source security inspection CT scanning system mentioned above to scan an object simultaneously.

Optionally, in a dual-source security inspection CT scanning method of an embodiment of the present disclosure, a CT image may be reconstructed and acquired based on the scanned data of the two sets of scan imaging systems.

High energy scanned data and low energy scanned data of the same section may be acquired respectively by using high energy and low energy ray sources of the two sets of scan imaging systems, and a double-energy CT image of the same section may be reconstructed and acquired. The forward speed of a conveyor belt is equal to the scanning speed of each set of the scan imaging systems during the scanning process.

In addition, two or more single-energy CT images of different sections may be reconstructed and acquired by using the scanned data of the two sets of scanning systems. Preferably, the scanned data of the two sets of scanning systems is complementary, and a complete CT image is reconstructed and acquired based on the combination of the complementary scanned data. The forward speed of the conveyor belt is two times of the scanning speed of each set of the scan imaging systems during the scanning process.

The two sets of scanned data arranged alternatively along the scanning direction are acquired by using the two sets of scan imaging systems, and the two sets of scanned data are combined together into one group of scanned data.

Optionally, the dual security CT scanning method of an embodiment of the present disclosure can also use the two sets of scan imaging systems having high and low energy ray source respectively to acquire high energy and low energy scanned data respectively.

As can be seen, in the dual CT security scanning system and the scanning method provided in an embodiment of the present disclosure, two sets of imaging systems can be set respectively to ensure the two sets of imaging optical paths do not interfere with each other, therefore effectively avoiding the problem of scattering mutual interference between the dual sources of the dual-source CT scanning system in the prior art. The imaging method of the present disclosure is flexible and can double the scanning speed on condition that the rotating speed remains unchanged, therefore effectively solving the technical problem that enhancing the through-rate of inspected objects is limited by the rotating speed of the bearing. In addition, two sets of imaging system in the present disclosure can also use different energy to image, so as to acquire a true dual-energy image, thus the substance identification capability has a qualitative leap.

Finally, it should be noted that the above-mentioned embodiments are merely used for illustrating the technical solutions of the present disclosure, rather than limiting them; although the present disclosure has been described in detail with reference to the foregoing embodiments, those of ordinary skill in the art should understand that they could still make modifications to the technical solutions recorded in the foregoing embodiments or make equivalent substitutions to a part of the technical features; and these modifications or substitutions do not make the essence of the corresponding technical solutions depart from the spirit and scope of the technical solutions of the embodiments of the present disclosure.

## Claims

1. A dual-source security inspection CT scanning system, **characterized by** comprising:
two sets of scan imaging systems (6, 7), wherein each set of the scan imaging systems (6, 7) has its own separate ray source (6-1, 7-1) and detector (6-2, 7-2), the two sets of scan imaging systems (6, 7) are juxtaposed on a same rotary mechanism (2), and a predetermined interval is provided between imaging planes of the two sets of scan imaging systems (6, 7).

2. The dual-source security inspection CT scanning system of claim 1, which is **characterized in that**:
the two ray sources (6-1, 7-1) of the two sets of scan imaging systems (6, 7) are disposed on the rotary mechanism (2) at a predetermined angle.

3. The dual-source security inspection CT scanning system of claim 2, which is **characterized in that**:
the two ray sources (6-1, 7-1) of the two sets of scan imaging systems (6, 7) are disposed on the rotary mechanism (2) at an angle of 180° or 90°.

4. The dual-source security inspection CT scanning system of any one of claims 1 to 3, which is **characterized in that** the system is configured to:
reconstructing and acquiring a CT image based on scanned data of the two sets of scan imaging systems (6, 7).

5. The dual-source security inspection CT scanning system of claim 4, which is **characterized in that**:
the energy of the ray sources (6-1, 7-1) in the scan imaging systems (6, 7) is capable of switching between high energy and low energy.

6. The dual-source security inspection CT scanning system of claim 5, which is **characterized in that** the system is configured to:
acquiring high energy scanned data and low energy scanned data of a same section respectively by using high energy and low energy ray sources (6-1, 7-1) of the two sets of scan imaging systems (6, 7), reconstructing and acquiring a double-energy CT image of the same section.

7. The dual-source security inspection CT scanning system of claim 6, which is **characterized in that**:
a forward speed of a conveyor belt (4) of the dual-source security inspection CT scanning system is equal to a scanning speed of each set of the scan imaging systems (6, 7).

8. The dual-source security inspection CT scanning system of claim 4, which is **characterized in that** the system is configured to:
reconstructing and acquiring two or more single-energy CT images of different sections by using the scanned data of the two sets of scanning systems (6, 7),
wherein the scanned data of the two sets of scanning systems (6, 7) is complementary, and a complete CT image is reconstructed and acquired based on the complementary scanned data.

9. The dual-source security inspection CT scanning system of claim 8, which is **characterized in that**:
a forward speed of a conveyor belt (4) of the dual-source security inspection CT scanning system is two times of a scanning speed of each set of the scan imaging systems (6, 7).

10. A dual source security inspection CT scanning method, **characterized by** using the two sets of scan imaging systems (6, 7) of the dual-source security inspection CT scanning system of any one of claims 1 to 9 to scan an object simultaneously.

11. The dual source security inspection CT scanning method of claim 10, which is **characterized in that** the method comprises:
reconstructing and acquiring a CT image based on the scanned data of the two sets of scan imaging systems (6, 7).

12. The dual source security inspection CT scanning method of claim 11, which is **characterized in that** reconstructing and acquiring a CT image based on the scanned data of the two sets of scan imaging systems (6, 7) comprises:
acquiring high energy scanned data and low energy scanned data of a same section respectively by using high energy and low energy ray sources (6-1, 7-1) of the two sets of scan imaging systems (6, 7), reconstructing and acquiring a double-energy CT image of the same section.

13. The dual source security inspection CT scanning method of claim 12, which is **characterized in that**:
a forward speed of a conveyor belt (4) of the dual-source security inspection CT scanning system is equal to a scanning speed of each set of the scan imaging systems (6, 7) during a scanning process.

14. The dual source security inspection CT scanning method of claim 11, which is **characterized in that** reconstructing and acquiring a CT image based on the scanned data of the two sets of scan imaging systems (6, 7) comprises:
reconstructing and acquiring two or more single-energy CT images of different sections by using the scanned data of the two sets of scanning systems (6, 7),
wherein the scanned data of the two sets of scanning systems (6, 7) is complementary, and a complete CT image is reconstructed and acquired based on the complementary scanned data.

15. The dual source security inspection CT scanning method of claim 14, which is **characterized in that**:
a forward speed of a conveyor belt (4) of the dual-source security inspection CT scanning system is two times of a scanning speed of each set of scan imaging systems (6, 7) during a scanning process.
